# EUROPÄISCHE PATENTANMELDUNG

(11) **EP 4 737 716 A1**
(43) Veröffentlichungstag der Anmeldung: **06.05.2026**
(21) Anmeldenummer: 25206769.9
(22) Anmeldetag: 06.10.2025
(51) Int. Cl.: F03D 15/00, F03D 80/70

(54) **LAGERANORDNUNG FÜR EINE WINDKRAFTANLAGE**

(30) Priorität: 30.10.2024 DE 102024210469
(71) Anmelder: ZF Friedrichshafen AG, 88046 Friedrichshafen (DE); ZF Wind Power Antwerpen NV, 3920 Lommel (BE)
(72) Erfinder: Klein-Hitpass, Arno, 52074 Aachen (DE)
(74) Vertreter: ZF Friedrichshafen AG

(57) **Zusammenfassung**

Die Erfindung betrifft eine Lageranordnung für eine Windkraftanlage zum Lagern eines Triebstrangs (10) an einem Turm der Windkraftanlage. Die Lageranordnung umfasst eine Grundplatte (20), welche an dem Turm anbringbar ist und einen Hauptlagerabschnitt (22) zum drehbaren Lagern einer Rotorwelle des Triebstrangs und zum Abstützen von Kräften der Rotorwelle aufweist. Der Hauptlagerabschnitt ist ausgebildet, radiale Kräfte mit Bezug auf eine Rotorwellenachse in die Grundplatte einzuleiten und axiale Verschiebungen entlang der Rotorwellenachse zuzulassen. Die radialen Kräfte weisen Komponenten in einer Querrichtung und Komponenten in einer Hochrichtung auf. Die Lageranordnung umfasst ferner ein Lagergehäuse zum Aufnehmen und Lagern von Teilen des Triebstrangs, und eine Torsionslagereinheit (30) zum Abstützen eines Torsionsmoments um die Rotorwellenachse, welches von dem Triebstrang auf das Lagergehäuse aufgebracht wird. Die Torsionslagereinheit ist ausgebildet, axiale Kräfte in Richtung der Rotorwellenachse und Torsionsmomente um die Rotorwellenachse in die Grundplatte einzuleiten. Die Erfindung betrifft auch eine Windkraftanlage.

## Beschreibung

### Technisches Gebiet

Die vorliegende Offenbarung bezieht sich auf eine Lageranordnung für eine Windkraftanlage. Die vorliegende Offenbarung bezieht sich ferner auf eine Windkraftanlage mit einer Lageranordnung.

### Stand der Technik

Windkraftanlagen sind bekannt, welche dazu dienen, aus Windenergie durch Umwandlung Elektrizität zu erzeugen. Zur Umwandlung ist in derartigen Anlagen ein Rotor vorgesehen, welcher dazu ausgebildet ist, Windenergie in eine mechanische Leistung, beispielsweise in eine Rotation mit einem Drehmoment, umzuwandeln. Das so erzeugte Drehmoment kann in einen Triebstrang eingeleitet werden, um in elektrische Leistung umgewandelt zu werden, beispielsweise durch einen Generator. In Anbetracht der hohen Gewichte und Kräfte, die beispielsweise bei großen Windkraftanlagen mit einer Leistung von mehreren Megawatt auftreten, werden hinsichtlich Belastbarkeit und Krafteinleitung hohe Anforderungen an die Lagerung des Triebstrangs gestellt. Aufgrund dieser Anforderungen werden zur Aufnahme und Lagerung aller Kräfte des Triebstrangs herkömmlich massive Gehäuse mit hoher Steifigkeit zur Lagerung verwendet, was ein hohes Gewicht zur Folge haben kann.

### Darstellung der Erfindung

Ein erster Aspekt der vorliegenden Offenbarung betrifft eine Lageranordnung für eine Windkraftanlage zum Lagern eines Triebstrangs an einem Turm der Windkraftanlage. Die Windkraftanlage kann einen Rotor aufweisen. Der Rotor kann dazu ausgebildet sein, eine Windenergie in eine rotatorische mechanische Energie umzuwandeln und diese in den Triebstrang einzuleiten. Die Windkraftanlage kann einen Turm sowie eine Gondel aufweisen, welche zumindest Teile des Triebstrangs aufnimmt und lagert. Die Gondel kann an einem oberen Ende des Turms angebracht sein. Die Gondel kann drehbar an dem Turm angebracht sein. Die Gondel kann um eine vertikale Gierachse drehbar sein, um eine Gierbewegung der Gondel relativ zu dem Turm auszuführen. Die Windkraftanlage kann ein Gierlager zum Bereitstellen der Gierbewegung aufweisen. Die Gierbewegung kann dazu dienen, die Gondel beziehungsweise den Triebstrang in einer horizontalen Ebene relativ zu dem Wind auszurichten, beispielsweise um einen gewünschten Anstellwinkel zu der Windrichtung zu bewirken. Ein unteres Ende des Turms kann an einem Boden verankert sein. Alternativ kann das untere Ende des Turms an einer Offshore-Windanlagenplattform angebracht sein.

Der Triebstrang kann einen Generator aufweisen, um Windenergie in elektrische Energie umzuwandeln. Der Rotor kann beispielsweise über eine Rotorwelle des Triebstrangs mit dem Generator verbunden sein. Der Rotor kann mehrere Rotorblätter, beispielsweise drei Rotorblätter, aufweisen. Der Triebstrang kann eine Nabe aufweisen, über welche der Rotor an der Rotorwelle gekoppelt ist. Die Nabe kann dazu ausgebildet sein, einen Anstellwinkel der Rotorblätter zu verstellen. Der Triebstrang kann ein Getriebe aufweisen, welches in einem Drehmomentfluss zwischen dem Rotor und dem Generator angeordnet ist. Der Generator kann dazu ausgebildet sein, die Rotation der Rotorwelle oder die Rotation eines Abtriebs des Getriebes für Stromerzeugung zu nutzen. Das Getriebe kann dazu ausgebildet sein, eine Drehzahl der Rotorwelle in eine andere, beispielsweise höhere, Drehzahl zum Antreiben des Generators zu überführen. Die Drehzahl der Rotorwelle kann im Betrieb zum Beispiel zwischen 2 U/min und 30 U/min, beispielsweise zwischen 5 U/min und 20 U/min, betragen. Die Drehzahl zum Antreiben des Generators kann im Betrieb zum Beispiel zwischen 500 U/min und 3000 U/min, beispielsweise zwischen 900 U/min und 2000 U/min, betragen. Ein Antrieb des Getriebes kann mit dem Rotor mechanisch wirkverbunden sein und der Abtrieb des Getriebes kann beispielsweise mit dem Generator mechanisch wirkverbunden sein. Das Getriebe kann dazu ausgebildet sein, ein Drehmoment von der Rotorwelle an den Generator zu übertragen. Der Triebstrang kann ferner Hilfsaggregate aufweisen. Die Hilfsaggregate können dazu ausgebildet sein, Parameter des restlichen Triebstrangs und physikalische Größen der Windkraftanlage zu beeinflussen. Die Hilfsaggregate können beispielsweise ein Heizsystem, ein Kühlsystem, ein Ausrichtsystem für die Gondel, ein Verstellsystem für die Nabe und/oder Wandlersysteme, beispielsweise Wechselrichter, für die erzeugte elektrische Energie umfassen.

Die Lageranordnung kann dazu ausgebildet sein, mindestens manche kinematische Freiheitsgrade des Triebstrangs abzustützen. Die kinematischen Freiheitsgrade können drei Verschiebungen und drei Rotationen umfassen. Die Lageranordnung kann dazu ausgebildet sein, einen, mehrere oder alle Freiheitsgrade des Triebstrangs oder von Teilen davon abzustützen. Je nach Ausgestaltung der Lageranordnung kann eine weitere Lageranordnung vorgesehen sein, welche freibleibende Freiheitsgrade sperrt und/oder Teile des Triebstrangs, die nicht durch die Lageranordnung gelagert sind, lagert. Grundsätzlich kann es zum Betrieb der Windkraftanlage erforderlich sein, fünf der sechs Freiheitsgrade der Rotorwelle festzuhalten. Ein rotatorischer Freiheitsgrad der Rotorwelle kann im Betrieb frei bleiben, um eine Rotation der Rotorwelle und ein damit einhergehendes Einleiten von Drehmoment zur Energieerzeugung zu ermöglichen. Die Rotation der Rotorwelle kann ein Reaktionsmoment in dem Generator bewirken. Das Reaktionsmoment in dem Generator kann durch die Lageranordnung abgestützt werden. Der Triebstrang kann auch eine Bremseinrichtung aufweisen, welche die Rotation der Rotorwelle abbremsen kann, beispielsweise bei zu starkem Wind oder für Wartungsarbeiten.

Die Lageranordnung weist eine Grundplatte auf, welche an dem Turm anbringbar ist. Die Grundplatte kann drehbar an dem Turm gelagert sein, beispielsweise unmittelbar an dem Turm oder mittelbar über ein Gierlager. Die Grundplatte kann dazu ausgebildet sein, Anbindungspunkte für die Lageranordnung zur Krafteinleitung und/oder Momenteneinleitung bereitzustellen. Die Anbindungspunkte können starre Verbindungen und/oder gelenkige Verbindungen umfassen. Die Grundplatte kann beispielsweise als ein zumindest teilweise ringförmiges Element ausgebildet sein. Die Grundplatte kann auch als ein Schalenelement ausgebildet sein. Die Grundplatte kann an einem rotorseitigen Ende einen Durchgang für die Rotorwelle aufweisen.

Die Grundplatte weist einen Hauptlagerabschnitt zum drehbaren Lagern einer Rotorwelle des Triebstrangs und zum Abstützen von Kräften der Rotorwelle auf. Der Hauptlagerabschnitt kann an einem rotorseitigen Endabschnitt der Gondel angeordnet sein, beispielsweise in der Nähe der Nabe. Der Hauptlagerabschnitt kann mit der Grundplatte einstückig ausgebildet sein oder daran befestigt sein. Der Hauptlagerabschnitt kann ein Hauptlager aufweisen, welches die Rotorwelle drehbar lagert.

Der Hauptlagerabschnitt ist ausgebildet, radiale Kräfte mit Bezug auf eine Rotorwellenachse in die Grundplatte einzuleiten. Die Rotorwellenachse kann eine Mittelachse der Rotorwelle sein. Die Rotorwellenachse kann unter Umständen nicht gerade verlaufen, sondern einer Biegung der Rotorwelle folgen. Die radialen Kräfte der Rotorwelle können beispielsweise eine Gewichtskraft des Rotors, die Gewichtskraft der Rotorwelle und/oder Betriebskräfte aufgrund der Rotation der Rotorwelle umfassen. Die radialen Kräfte weisen Komponenten in einer Querrichtung und Komponenten in einer Hochrichtung auf. Die Querrichtung kann eine Richtung sein, die senkrecht zu der Rotorwellenachse und im Wesentlichen horizontal verläuft. Die Hochrichtung kann eine Richtung sein, die senkrecht zu der Rotorwellenachse sowie senkrecht zu der Querrichtung beziehungsweise zu einer Querachse verlaufen. Beispielsweise können die Rotorwellenachse, eine Hochachse und eine Querachse einen gemeinsamen Ursprung im Mittelpunkt des Hauptlagerabschnitts beziehungsweise des Hauptlagers haben und ein rechtshändiges kartesisches Koordinatensystem bilden. Der Hauptlagerabschnitt kann zudem ausgebildet sein, Nickmomente um eine in der Querrichtung verlaufende Achse in die Grundplatte einzuleiten. Der Hauptlagerabschnitt kann ferner ausgebildet sein, Giermomente um eine in einer Hochrichtung verlaufende Achse in die Grundplatte einzuleiten. Die Rotorwellenachse kann in einem unbelasteten Zustand der Rotorwelle im Wesentlichen horizontal verlaufen. Die Rotorwellenachse kann alternativ in einem Winkel zur Horizontalen angeordnet sein. Beispielsweise kann ein rotorseitiges Ende der Rotorwelle höher angeordnet sein als ein generatorseitiges Ende. Im belasteten Zustand kann sich die Rotorwelle verbiegen, wobei die Rotorwellenachse der Biegung der Rotorwelle folgt. Der Hauptlagerabschnitt ist ferner dazu ausgebildet, axiale Verschiebungen entlang der Rotorwellenachse zuzulassen. Beispielsweise kann das Hauptlager als ein reines Radiallager, zum Beispiel als ein zylindrisches Gleitlager, ausgebildet sein.

Die Lageranordnung weist ein Lagergehäuse zum Aufnehmen und Lagern von Teilen des Triebstrangs auf. Das Lagergehäuse kann dazu ausgebildet sein, nur Teile des Triebstrangs oder auch den gesamten Triebstrang aufzunehmen und zu lagern. Beispielsweise kann das Lagergehäuse nur das Getriebe, nur den Generator oder sowohl das Getriebe als auch den Generator abstützen. Das Lagergehäuse kann auch dazu ausgebildet sein, rotierbare Elemente abzustützen. Die rotierbaren Elemente können beispielsweise die Rotorwelle oder Getriebeelemente wie Zahnräder aufweisen. Die in dem Lagergehäuse aufgenommenen und gelagerten Teile und/oder rotierbaren Elemente können Kräfte und/oder Momente in das Lagergehäuse einleiten.

Die Lageranordnung weist eine Torsionslagereinheit zum Abstützen eines Torsionsmoments um die Rotorwellenachse, welches von dem Triebstrang auf das Lagergehäuse aufgebracht wird, auf. Die Torsionslagereinheit kann beispielsweise ein Koppelelement zum Umwandeln des Torsionsmoments um die Rotorwellenachse, welches von dem Triebstrang auf das Lagergehäuse aufgebracht wird, in einer in der Hochrichtung wirkenden Kraft aufweisen. Das Torsionsmoment kann beispielsweise ein Reaktionsmoment des Generators und/oder des Getriebes auf ein Antriebsmoment der Rotorwelle sein. Die Torsionslagereinheit kann dazu ausgebildet sein, mithilfe einer geometrischen Anordnung, die einen Hebelarm zwischen der Rotorwellenachse und einer Wirklinie der in der Hochrichtung wirkenden Kraft umfasst, das Torsionsmoment um die Rotorwellenachse in die Kraft in der Hochrichtung umzuwandeln. Die Torsionslagereinheit kann als eine Drehmomentstütze ausgebildet sein, welche das Torsionsmoment außerhalb der Rotorwellenachse als Kraft in die Grundplatte einleitet. Die Torsionslagereinheit kann als ein steifes Element ausgebildet sein, welches an dem Lagergehäuse und/oder an der Grundplatte befestigt ist. Die Torsionslagereinheit kann auch einstückig mit dem Lagergehäuse ausgebildet sein.

Die Torsionslagereinheit ist ausgebildet, axiale Kräfte in Richtung der Rotorwellenachse und Torsionsmomente um die Rotorwellenachse in die Grundplatte einzuleiten. Die Torsionslagereinheit kann auch dazu ausgebildet sein, weitere Kräfte, beispielsweise Gewichtskräfte sowie Kräfte, die nicht durch den Hauptlagerabschnitt abgestützt werden, in die Grundplatte einzuleiten. Wird eine Kraft oder ein Moment eingeleitet, bedeutet dies, dass ein mit der Kraft beziehungsweise dem Moment zusammenhängender Freiheitsgrad gesperrt wird. Folglich bedeutet das Einleiten einer Kraft in eine Richtung, dass eine Verschiebung in der Richtung im Wesentlichen unterbunden wird. Gleichermaßen bedeutet das Einleiten eines Moments, dass eine Rotation um die Momentachse im Wesentlichen unterbunden wird.

Mit der Lageranordnung gemäß dem ersten Aspekt wird eine Lageranordnung bereitgestellt, welche zwei separate Krafteinleitungspfade für Lasten von der Rotorwelle zu der Grundplatte bereitstellt. Ein Krafteinleitungspfad führt über den Hauptlagerabschnitt zu der Grundplatte und dient dem Abstützen von radialen Kräften. Ein weiterer Krafteinleitungspfad führt über das Lagergehäuse und die Torsionslagereinheit zu der Grundplatte und dient dem Abstützen von axialen Kräften und Torsionsmomenten der Rotorwelle an der Grundplatte ab. Durch die Trennung der Krafteinleitungspfade in Abhängigkeit von der zu übertragenden Last kann jeder Krafteinleitungspfad besser auf die ihm zugrunde liegende Last abgestimmt sein. Beispielsweise ist es möglich, Steifigkeiten richtungsabhängig einzustellen. Zum Beispiel können Steifigkeiten in Richtung einer Last maximiert und Steifigkeiten quer zu der Richtung der Last minimiert werden. Naturgemäß wird Steifigkeit durch gezielten Materialeinsatz bereitgestellt. Mit der Lageranordnung des ersten Aspekts kann daher der Materialeinsatz in Anbetracht der Lasten optimiert werden. Demzufolge erzielt die Lageranordnung des ersten Aspekts hohe Steifigkeiten bei gleichzeitig geringem Gewicht.

In einer Ausführungsform weist die Grundplatte einen Stützabschnitt auf. Der Stützabschnitt ist dazu ausgebildet, die Torsionslagereinheit drehbar um eine in der Querrichtung verlaufende Stützachse abzustützen. Das Lagergehäuse kann an der Torsionslagereinheit befestigt sein. Das Lagergehäuse kann auch einstückig mit der Torsionslagereinheit ausgebildet sein. Durch die drehbare Lagerung der Torsionslagereinheit um die Stützachse kann der Verbund aus Torsionslagereinheit und Lagergehäuse einer etwaigen Biegung der Rotorwelle folgen. Somit ist es nicht erforderlich, Lagerlasten aufzubringen, welche der Biegung der Rotorwelle entgegenwirken. Demnach kann der Materialeinsatz weiter optimiert werden. Damit wird eine leichte Lageranordnung erzielt.

In einer Ausführungsform weist die Torsionslagereinheit zur Lagerung der Rotorwelle eine angestellte Lagerung mit zwei Radial-Axial-Lagern auf, die jeweils radiale und axiale Kräfte übertragen. Grundsätzlich können Lager je nach Bauform in Radiallager, die nur Radialkräfte aufnehmen, Axiallager, die nur Axialkräfte aufnehmen, und Radial-Axial-Lager, die sowohl radiale Kräfte als auch axiale Kräfte aufnehmen, unterteilt werden. Unabhängig von der Bauform kann mindestens eines der Lager als ein Wälzlager ausgebildet sein. Gleichermaßen kann mindestens eines der Lager als ein Gleitlager ausgebildet sein. Die angestellte Lagerung kann eine Lagerung sein, bei welcher axiale Kräfte in einer Richtung nur durch eines der Radial-Axial-Lager abgestützt werden und axiale Kräfte in der anderen Richtung nur durch das andere Radial-Axial-Lager abgestützt werden. Dies kann beispielsweise durch zwei spiegelbildlich angeordnete Schrägkugellager oder Kegelrollenlager erzielt werden. Kraftflusslinien durch die Lager können eine X-Anordnung oder eine O-Anordnung bilden. Bei der O-Anordnung können Verlängerungen der Kraftflusslinien die Rotorwellenachse außerhalb der Lagerstellen schneiden. Bei der X-Anordnung können die Kraftflusslinien die Rotorwellenachse zwischen den Lagerstellen schneiden. In beiden Fällen stellt die angestellte Lagerung eine leichte, einfache und kostengünstige Möglichkeit zum Aufnehmen von großen Kräften und Momenten sowie zum besseren Nachfolgen der Biegung durch die Torsionslagereinheit.

In einer Ausführungsform weist die Torsionslagereinheit zur Lagerung der Rotorwelle ein Radial-Axial-Lager und ein separates Radiallager auf. Damit kann ein kompakter und leichter Aufbau erzielt werden. Zudem können Montagevorteile erzielt werden.

In einer Ausführungsform weist die Torsionslagereinheit zur Lagerung der Rotorwelle ein Radiallager und ein separates Axiallager auf. Damit kann ein einfacher und leichter Aufbau erzielt werden. Zudem können mit einer derartigen Lagerung die radialen Kräfte und axialen Kräfte auch innerhalb der Torsionslagereinheit verschiedenen Kraftübertragungspfaden folgen. Dies ermöglicht eine weitere Optimierung des Materialeinsatzes. Das Axiallager kann an einem gesamten Umfang um die Rotorwellenachse ausgebildet sein. In einer weiteren Ausgestaltung kann das Axiallager nur abschnittsweise entlang des Umfangs ausgebildet sein. Damit werden der Materialeinsatz und das Gewicht reduziert.

In einer Ausführungsform weist die Torsionslagereinheit zur Lagerung der Rotorwelle ein weiteres Radiallager auf, und das Radiallager und das weitere Radiallager sind symmetrisch um die Stützachse angeordnet. Damit wird eine gleichmäßige Krafteinleitung in die Torsionslagereinheit erzielt. Das Radiallager und das weitere Radiallager können ähnlich groß dimensioniert sein. Somit können für die gleiche Last zwei kleinere Lager anstelle eines großen Lagers verwendet werden. Werden gleiche Lager verwendet, werden zudem Kostensenkungen erzielt. In einer alternativen Ausgestaltung kann das weitere Radiallager größer oder kleiner dimensioniert sein als das Radiallager, beispielsweise wenn die Belastung asymmetrisch ist.

In einer Ausführungsform weist die Torsionslagereinheit zur Lagerung der Rotorwelle ein weiteres Radiallager auf, und das weitere Radiallager ist weiter von der Stützachse beabstandet als das Radiallager. In einem solchen Fall kann das weitere Radiallager primär zum Ausrichten der Torsionslagereinheit entlang der Biegelinie der Rotorwelle dienen und nur geringe Radialkräfte von der Rotorwelle aufnehmen. Dann kann das weitere Radiallager sehr klein dimensioniert sein. Beispielsweise kann das Radiallager zum Aufnehmen der gesamten Kippmomente der Rotorwelle dimensioniert sein und das weitere Radiallager kann zur Einleitung lediglich einer zum Ausrichten der Torsionslagereinheit und des Lagergehäuses ausreichenden Kraft dimensioniert sein.

In einer Ausführungsform ist das Radiallager als ein Wälzlager und das Axiallager als ein Gleitlager ausgebildet. Eine derartige Hybridlagerung stellt einen einfachen und kostengünstigen Aufbau bereit.

In einer Ausführungsform weist die Lageranordnung eine Verbindungseinrichtung auf. Die Verbindungseinrichtung weist einen Rotorwellenabschnitt und einen Getriebeabschnitt auf. Der Rotorwellenabschnitt ist drehfest mit der Rotorwelle verbindbar. Der Getriebeabschnitt ist drehfest mit einem Getriebe des Triebstrangs verbindbar. Falls der Triebstrang kein Getriebe aufweist, kann stattdessen der Getriebeabschnitt mit einem Generator verbindbar sein. Die Verbindungseinrichtung kann dazu ausgebildet sein, eine mechanische Wirkverbindung zwischen der Rotorwelle und weiteren Triebstrangkomponenten bereitzustellen. Der Rotorwellenabschnitt und der Getriebeabschnitt können lösbar miteinander verbunden sein. Durch die Verbindungseinrichtung können die Rotorwelle und das Getriebe beziehungsweise der restliche Triebstrang auf einfache Weise voneinander entkoppelt werden. Damit wird ein Wartungsaufwand reduziert. Zudem können durch den Verbindungsabschnitt die Rotorwelle und die restlichen Triebstrangkomponenten unabhängig voneinander dimensioniert werden. Damit kann eine bessere Anpassung der Teiledimensionierungen an verschiedene Lastzustände und Rahmenbedingungen erzielt werden. Dadurch wird eine Lageranordnung mit geringem Gewicht erzielt.

In einer Ausführungsform ist mindestens einer von dem Rotorwellenabschnitt und dem Getriebeabschnitt in einem Kraftfluss zum Einleiten von axialen Kräften von der Rotorwelle in die Torsionslagereinheit angeordnet. Beispielsweise kann der Verbindungsabschnitt scheibenförmig ausgebildet sein und eine Lagerfläche für ein Axiallager bereitstellen. Alternativ oder zusätzlich kann der Verbindungsabschnitt zylinderförmig ausgebildet sein und eine Lagerfläche für ein Radiallager bereitstellen. Durch das Vorsehen des Verbindungsabschnitts auch zur Krafteinleitung wird der Materialeinsatz weiter reduziert.

In einer Ausführungsform weist die Torsionslagereinheit einen Schmiermittelaufnahmeraum auf. Der Schmiermittelaufnahmeraum kann dazu ausgebildet sein, ein Schmiermittel für das Getriebe, andere Triebstrangkomponenten und/oder etwaige Hilfsaggregate aufzunehmen. Der Schmiermittelaufnahmeraum kann nach außen hin abgedichtet sein und mit Anschlüssen für etwaige Anschlussleitungen versehen sein. Der Schmiermittelaufnahmeraum kann auch dazu ausgebildet sein, einen separaten Schmiermittelbehälter aufzunehmen. In einem solchen Fall können hierzu Durchgangsbohrungen für Anschlussleitungen vorgesehen sein. Durch die Integration des Schmiermittelaufnahmeraums wird sonst ungenutztes Volumen in der Torsionslagereinheit nutzbar gemacht, womit eine Funktionsvereinheitlichung und folglich eine weitere Gewichtsreduktion erzielt werden.

In einer Ausführungsform ist die Grundplatte als ein Schalenelement ausgebildet, das im Wesentlichen einer Zylinderfläche folgt. Beispielsweise kann das Schalenelement eine ebene Bodenfläche aufweisen, welche an den Turm anbringbar ist. Von der ebenen Bodenfläche kann sich das Schalenelement bedarfsgerecht nach oben erstrecken. Beispielsweise können verschiedene Höhen des Schalenelements den Hauptlagerabschnitt und/oder den Stützabschnitt bereitstellen. Die Fläche des Schalenelements kann von der Zylinderfläche abweichen, beispielsweise um Verstärkungsstreben oder lokale Verdickungen bereitzustellen.

Das Schalenelement kann entlang einer oder mehrerer Teilungslinien teilbar sein. Teile des Schalenelements können permanent oder lösbar entlang der Teilungslinien aneinandergefügt sein. Beispielsweise können Teilungslinien vorgesehen sein, welche den Hauptlagerabschnitt in mehrere Teilabschnitte unterteilen. Solche Teilungslinien können durch einen Mittelpunkt eines Hauptlagers, welches in dem Hauptlagerabschnitt aufgenommen ist, und im Wesentlichen horizontal verlaufen. Alternativ oder zusätzlich können Teilungslinien unterhalb des Hauptlagers horizontal verlaufen. Weitere Teilungslinien können im Wesentlichen vertikal verlaufen, beispielsweise um die Fertigung und/oder den Transport des Schalenelements zu vereinfachen. Das Fügen der Schalenelemente kann an einem Herstellungsort des Schalenelements oder an einem Aufstellort der Windkraftanlage erfolgen. Das Fügen kann beispielsweise durch Formschluss, durch Fügeverfahren oder durch Reibschluss erfolgen. Beispielsweise kann das Fügen durch Schweißen und/oder Verschrauben erfolgen. Falls die als Schalenelement ausgebildete Grundplatte einen Stützabschnitt aufweist, können unterhalb von diesem eine oder mehrere Aussparungen, beispielsweise Bohrungen, ausgebildet sein. Damit kann eine effektive Steifigkeit des Stützabschnitts beim Aufnehmen von Kräften von der Torsionslagereinheit eingestellt werden.

Ein zweiter Aspekt der vorliegenden Offenbarung betrifft eine Windkraftanlage mit der Lageranordnung gemäß dem ersten Aspekt. Die Windkraftanlage kann beispielsweise zur Stromerzeugung ausgebildet sein. Die Windkraftanlage weist einen Triebstrang, einen Turm und die Lageranordnung des ersten Aspekts auf. Die Lageranordnung ist an einer Spitze des Turms angebracht. Beispielsweise kann eine Grundplatte der Lageranordnung über ein Gierlager an der Spitze des Turms angebracht sein. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

In einer Ausführungsform überlappt ein Krafteinleitungsort zum Einleiten von Kräften von der Torsionslagereinheit in die Grundplatte eine spitzenseitige Wand des Turms in der Hochrichtung. Dadurch werden Kräfte von der Torsionslagereinheit auf kurzem Weg und mit hoher Steifigkeit in den Turm eingeleitet. Somit werden durch einen einfachen Aufbau der Materialeinsatz und das Gewicht minimiert.

In einer Ausführungsform weist der Triebstrang einen Rotor mit mindestens zwei Rotorblättern und einem Generator auf. Der Rotor ist über die Rotorwelle mit dem Generator mechanisch wirkverbunden. In einer Ausführungsform weist der Triebstrang ein Getriebe auf, das in einem Drehmomentfluss zwischen der Rotorwelle und dem Generator angeordnet ist.

### Kurze Beschreibung der Figuren

Fig. 1 zeigt schematisch eine Windkraftanlage mit einem Triebstrang.
Fig. 2 veranschaulicht ein Grundprinzip zum Abstützen von Kräften und Momenten der Windkraftanlage von Fig. 1.
Fig. 3 veranschaulicht eine Durchbiegung einer Rotorwelle der Windkraftanlage von Fig. 1.
Fig. 4 zeigt schematisch eine Lageranordnung nach dem Grundprinzip von Fig. 2.
Fig. 5 zeigt schematisch eine Grundplatte der Lageranordnung von Fig. 4.
Fig. 6 zeigt schematisch eine Lageranordnung gemäß einer ersten Ausführungsform der vorliegenden Offenbarung in einer seitlichen Schnittansicht entlang einer Rotorwellenachse.
Fig. 7 ist eine schematische Schnittansicht der Lageranordnung von Fig. 6.
Fig. 8 ist eine Veranschaulichung einer Demontage einer Verbindungseinrichtung der Lageranordnung von Fig. 6 und Fig. 7.
Fig. 9 ist eine schematische Schnittansicht einer Lageranordnung gemäß einer zweiten Ausführungsform der vorliegenden Offenbarung.
Fig. 10 ist eine schematische Schnittansicht einer Lageranordnung gemäß einer dritten Ausführungsform der vorliegenden Offenbarung.
Fig. 11 ist eine Veranschaulichung einer Demontage einer Verbindungseinrichtung der Lageranordnung von Fig. 10.
Fig. 12 ist eine schematische Schnittansicht einer Lageranordnung gemäß einer vierten Ausführungsform der vorliegenden Offenbarung.
Fig. 13 ist eine Veranschaulichung einer Demontage einer Verbindungseinrichtung der Lageranordnung von Fig. 12.
Fig. 14 zeigt schematisch eine Lageranordnung gemäß einer fünften Ausführungsform der vorliegenden Offenbarung in einer seitlichen Schnittansicht entlang der Rotorwellenachse.

### Detaillierte Beschreibung von Ausführungsformen

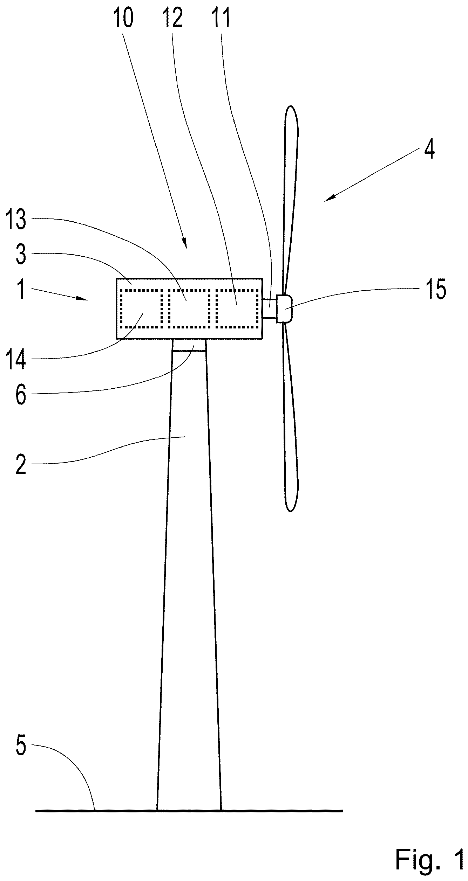

Fig. 1 veranschaulicht schematisch eine Windkraftanlage 1 in Horizontalbauweise. Die Windkraftanlage 1 weist eine Gondel 3 auf, welche über ein Gierlager 6 drehbar an einem oberen Ende eines Turms 2 befestigt ist. Ein unteres Ende des Turms 2 ist an einem Boden 5 verankert. In der Gondel 3 ist ein Triebstrang 10 aufgenommen, welcher eine Rotorwelle 11, ein Getriebe 12, einen Generator 13, Hilfsaggregate 14 und eine Nabe 15 aufweist. Ein Rotor 4 der Windkraftanlage 1 ist über die Nabe 15, die Rotorwelle 11 und das Getriebe 12 mit dem Generator 13 mechanisch wirkverbunden. Die Hilfsaggregate 14 können Einrichtungen zur Temperierung des Triebstrangs 10, Einrichtungen zum Wandeln von elektrischer Leistung, Einrichtungen zur Verstellung der Nabe 15 sowie Einrichtungen zum Ausrichten der Gondel 3 über das Gierlager 6 umfassen. Die Windkraftanlage 1 weist ferner eine Lageranordnung zum Lagern von Teilen des Triebstrangs 10 auf.

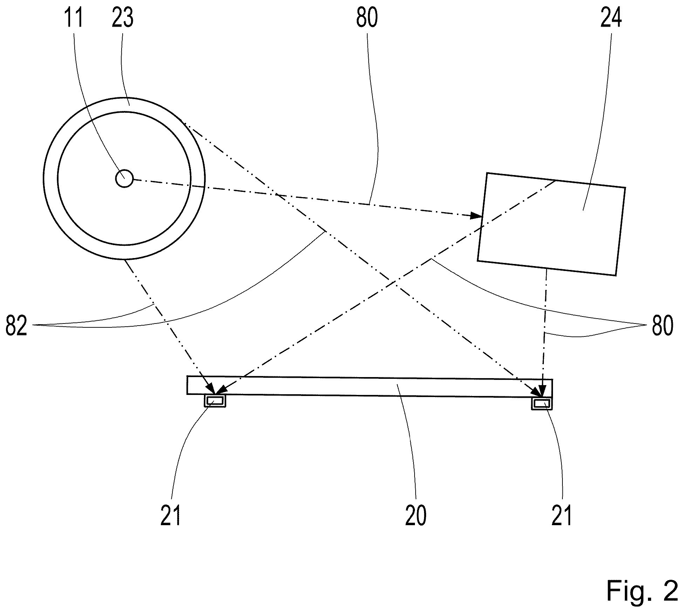

Fig. 2 veranschaulicht ein Grundprinzip zum Abstützen von Kräften und Momenten der Windkraftanlage 1. Die Windkraftanlage 1 weist den Triebstrang 10 mit der Rotorwelle 11 auf. Über den Rotor 4 werden Kräfte und Momente in die Rotorwelle 11 eingebracht. Diese Kräfte und Momente können beispielsweise ein Torsionsmoment um eine Rotorwellenachse 70 der Rotorwelle 11 sowie sonstige Rotorwellenlasten umfassen. Die sonstigen Rotorwellenlasten können beispielsweise axiale und radiale Kräfte sowie Momente um eine Gierachse und um eine Querachse umfassen. Die vorliegende Offenbarung sieht vor, zur Lagerung dieser Kräfte und Momente zwei separate Pfade zur Abstützung bereitzustellen, was in Fig. 2 als Prinzipskizze veranschaulicht ist. Die Rotorwelle 11 ist mit einem Hauptlager 23 gelagert. Das Hauptlager 23 ist ausgebildet, mindestens eine Rotation der Rotorwelle 11 frei zuzulassen und manche oder alle der sonstigen Rotorwellenlasten aufzunehmen. Die von dem Hauptlager 23 aufgenommenen sonstigen Rotorwellenlasten werden über eine Abstützung 82 in eine Grundplatte 20 eingeleitet, welche über ein oder mehrere Grundplattenlager 21 an dem Turm 2 angebracht ist. Das Torsionsmoment von der Rotorwelle 11 wird hingegen an einem Lagergehäuse 24 abgestützt. Das Lagergehäuse 24 ist zur Übertragung des Torsionsmoment an der Grundplatte 20 abgestützt, so dass eine Abstützung 80 des Torsionsmoments über das Lagergehäuse 24 und die Grundplatte 20 an den Grundplattenlagern 21 erfolgt. Durch dieses Grundprinzip wird eine Trennung der Pfade zur Abstützung des Torsionsmoments und der sonstigen Rotorwellenlasten bereitgestellt. Es ist zu beachten, dass manche der sonstigen Rotorwellenlasten ebenfalls über das Lagergehäuse 24 an der Grundplatte 20 abgestützt werden können. Ein Beispiel für eine derartige Abstützung wird später mit Bezug auf die Ausführungsformen beschrieben.

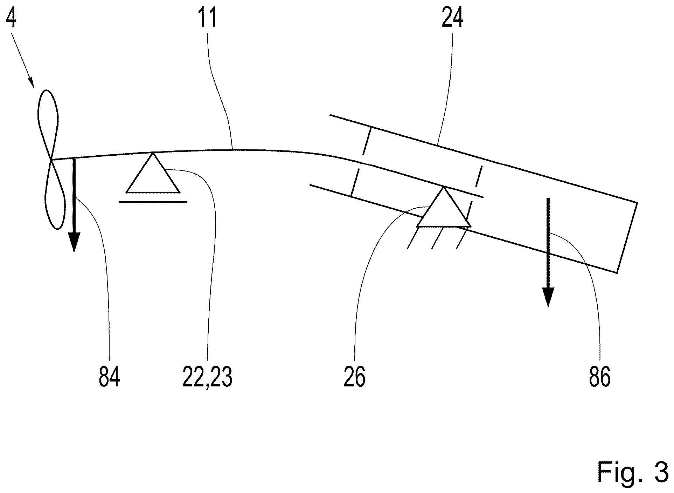

Fig. 3 zeigt schematisch eine Durchbiegung der Rotorwelle 11 der Windkraftanlage 1. Die Rotorwelle 11 ist auf der Seite des Rotors 4 durch das Hauptlager 23 und einen später beschriebenen Hauptlagerabschnitt 22 gelagert. Auf der Seite des Lagergehäuses 24 ist die Rotorwelle 11 über einen später beschriebenen Stützabschnitt 26 gelagert. Unter dem Einfluss der Schwerkraft wirken auf der Rotorwelle 11 eine Gewichtskraft 84 des Rotors 4 und eine Gewichtskraft 86 des Lagergehäuses 24 und der darin aufgenommenen Komponenten. Unter dem Einfluss dieser Gewichtskräfte 84, 86 kann sich die Rotorwelle 11 in Richtung der Schwerkraft durchbiegen, was in Fig. 3 überzeichnet dargestellt ist. Die vorliegende Offenbarung sieht vor, durch die später ausführlich beschriebene Lageranordnung der Ausführungsformen dem Lagergehäuse 24 zu ermöglichen, der Durchbiegung der Welle 11 zu folgen, um somit abzustützende Reaktionskräfte zu reduzieren.

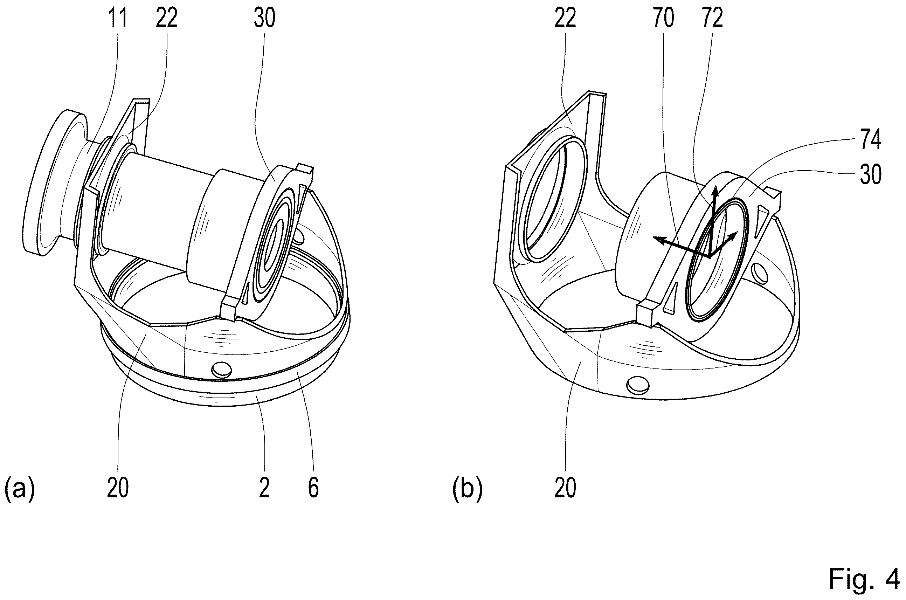

Fig. 4 zeigt schematisch eine Lageranordnung nach dem Grundprinzip von Fig. 2. In einem Bereich (a) auf der linken Seite von Fig. 4 sind der Turm 2, das Gierlager 6, die Grundplatte 20 und eine Torsionslagereinheit 30 sowie die Rotorwelle 11 dargestellt. Die Rotorwelle 11 ist in dem Hauptlagerabschnitt 22 drehbar gelagert. Die Torsionslagereinheit 30 ist zum Abstützen des Torsionsmoments ausgebildet. Ferner ist das in Fig. 4 nicht dargestellte Lagergehäuse 24 an der Torsionslagereinheit 30 befestigt. In einem Bereich (b) auf der rechten Seite von Fig. 4 sind alle Komponenten außer der Grundplatte 20 und der Torsionslagereinheit 30 ausgeblendet, um eine bessere Darstellung der folgenden Richtungsdefinitionen zu ermöglichen. Eine Rotorwellenachse 70 folgt einer Mittelachse der Rotorwelle 11. Horizontal und senkrecht zu der Rotorwellenachse 70 verläuft eine Querrichtung 74. Eine Hochrichtung 72 verläuft senkrecht zu der Rotorwellenachse 70 und der Querrichtung 74. In Fig. 4 sind Koordinatenachsen in der Hochrichtung 72 und der Querrichtung 74 mit gemeinsamem Ursprung mit der Rotorwellenachse 70 dargestellt, um ein kartesisches Koordinatensystem darzustellen. Nichtsdestotrotz beziehen sich Angaben, die auf die Hochrichtung 72 beziehungsweise die Querrichtung 74 verweisen, in der weiteren Beschreibung jeweils auf ortsunabhängige Richtungsangaben, außer es ist ein konkreter Ort benannt.

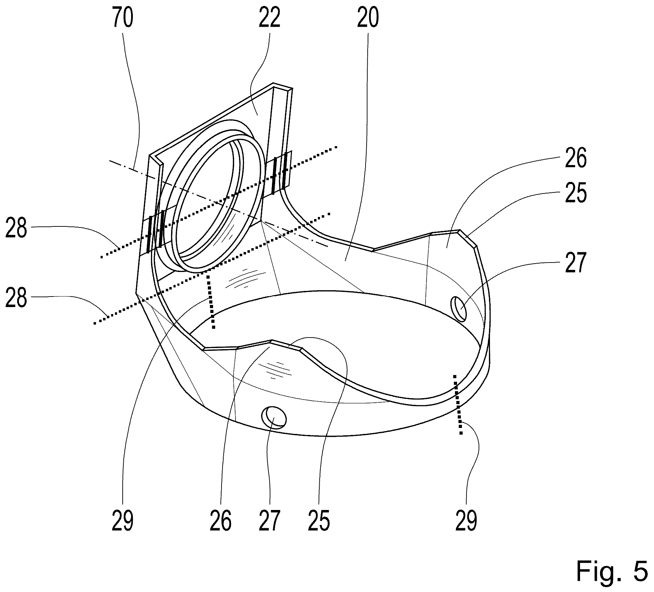

Fig. 5 zeigt schematisch die Grundplatte 20 von Fig. 4. Die Grundplatte 20 ist als ein Schalenelement ausgebildet, welches im Wesentlichen einer Zylinderfläche folgt. Genauer gesagt weist die Grundplatte 20 eine ebene Bodenfläche auf, von welcher aus sich dünnwandige Strukturen im Wesentlichen zylindrisch nach oben erstrecken. Die dünnwandigen Strukturen erstrecken sich zu unterschiedlichen Höhen. Dadurch sind der Hauptlagerabschnitt 22 und der Stützabschnitt 26 ausgebildet. An dem Hauptlagerabschnitt 22 ist eine Aufnahme für das Hauptlager 23 in Form von einer zylindrischen Durchgangsbohrung mit zylindrischer Innenfläche ausgebildet. Zwei Stützabschnitte 26 sind auf beiden Seiten der Rotorwellenachse 70 ausgebildet. Unterhalb jedes der Stützabschnitte 26 ist eine Aussparung 27 ausgebildet, welche zum Einstellen der Steifigkeit des Stützabschnitts 26 dient. Die Aussparung 27 ist vorliegend als Bohrung ausgebildet. Ein oberer Endabschnitt jedes Stützabschnitts 26 bildet einen Krafteinleitungsort 25 zum Einleiten von Kräften und Momenten von der Torsionslagereinheit 30 in die Grundplatte 20 aus.

Die Grundplatte 20 ist vorliegend durch mehrere Teile zusammengefügt, welche entlang Teilungslinien 28, 29 gefügt sind. Zur Vereinfachung der Montage des Hauptlagers 23 verläuft eine horizontale Linie 28 auf Höhe des Hauptlagers 23 und schneidet die Rotorwellenachse 70. Dadurch hat der Hauptlagerabschnitt 22 die Bauweise einer Lagerbrücke. Ferner ist der gesamte Hauptlagerabschnitt 22 durch eine weitere horizontale Teilungslinie 28, die unterhalb der Bohrung für das Hauptlager 23 verläuft, an den Rest der Grundplatte 20 gefügt. Dadurch kann der Hauptlagerabschnitt 22 separat gefertigt und bearbeitet werden. Zur Vereinfachung der Montage ist der untere Abschnitt der Grundplatte 20 entlang zwei vertikalen Teilungslinien 29 gefügt. Die vertikalen Teilungslinien 29 verlaufen vertikal und schneiden die Rotorwellenachse 70. Die zwei Hälften der Grundplatte 20 auf beiden Seiten der Rotorwellenachse 70 können somit separat gefertigt und im Nachgang gefügt werden. In einer weiteren Ausführungsform sind noch weitere vertikale Teilungslinien, beispielsweise zwei weitere vertikale Teilungslinien, um den Umfang der Grundplatte 20 verteilt.

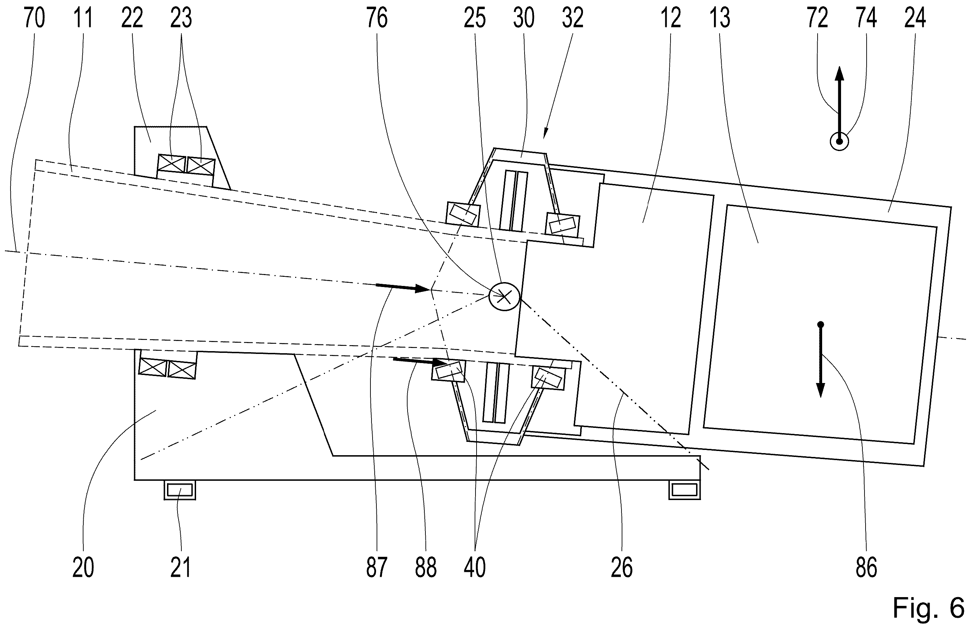

Fig. 6 zeigt schematisch eine Lageranordnung gemäß einer ersten Ausführungsform. Die Lageranordnung ist in einer seitlichen Schnittansicht entlang der Rotorwellenachse 70 dargestellt. Zum besseren Verständnis sind neben der Rotorwellenachse 70 auch die Hochrichtung 72 und die Querrichtung 74 exemplarisch dargestellt. Die Grundplatte 20 ist durch ein Grundplattenlager 21 an dem Gierlager 6 und somit an dem Turm 2 angebracht. Das Grundplattenlager 21 ist als ein rotationssymmetrisches Lagerelement ausgebildet und überträgt bei gesperrtem Gierlager 6 alle Freiheitsgrade der Grundplatte 20 auf den Turm 2. Das Hauptlager 23 ist vorliegend als ein Radiallager ausgebildet, welches die Rotation der Rotorwelle 11 sowie die axiale Verschiebung der Rotorwelle 11 zulässt. Hingegen nimmt das Hauptlager 23 radiale Kräfte der Rotorwelle 11, das heißt Kräfte in der Hochrichtung 72 und Kräfte in der Querrichtung 74, auf. Ferner nimmt das Hauptlager 23 ein Giermoment um eine Gierachse, welche durch einen Mittelpunkt des Hauptlagers 23 in der Hochrichtung 72 verläuft, auf.

Das Lagergehäuse 24 ist an der Torsionslagereinheit 30 befestigt, vorliegend verschraubt. Das Lagergehäuse 24 nimmt vorliegend das Getriebe 12 und den Generator 13 auf. Die Torsionslagereinheit 30 ist an dem Krafteinleitungsort 25 durch den Stützabschnitt 26 gestützt. Der Stützabschnitt 26 ist in Fig. 6 lediglich als Strichzweipunktlinie veranschaulicht. Die Torsionslagereinheit 30 ist durch den Stützabschnitt 26 derart gestützt, dass die Torsionslagereinheit 30 um eine Stützachse 76 drehbar ist. Die Stützachse 76 verläuft durch den Krafteinleitungsort 25 in der Querrichtung 74.

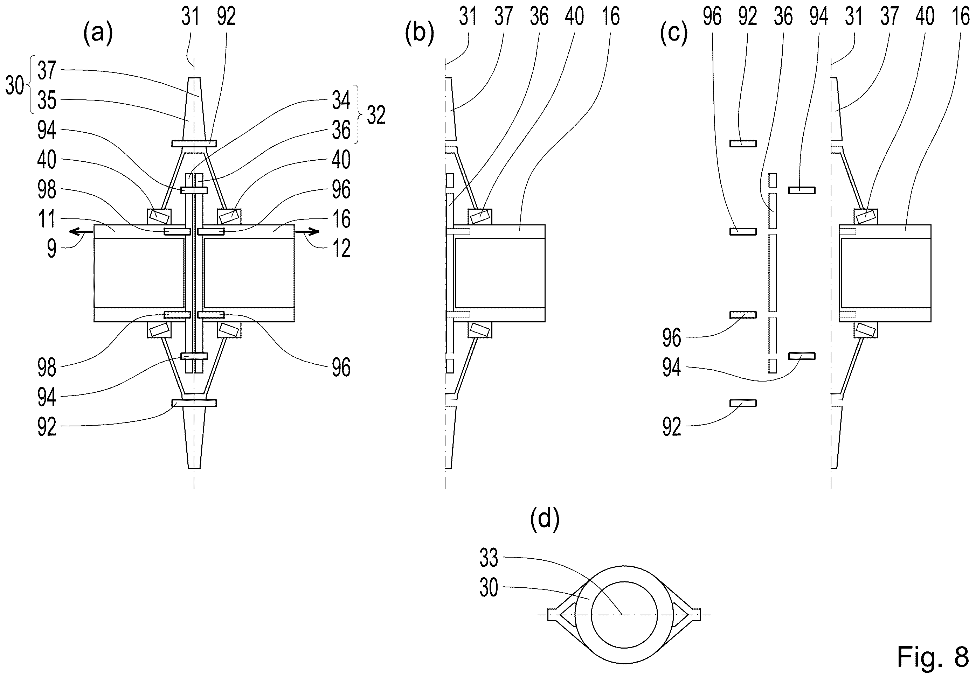

Die Rotorwelle 11 ist bei der vorliegenden Ausführungsform durch zwei Radial-Axial-Lager 40 in der Torsionslagereinheit 30 drehbar gelagert. Die Radial-Axial-Lager 40 sind vorliegend als Schrägrollenlager ausgebildet. Die Radial-Axial-Lager 40 der Torsionslagereinheit 30 stellen bei der vorliegenden Ausführungsform eine angestellte Lagerung für die Rotorwelle 11 bereit. Die angestellte Lagerung erfolgt vorliegend in einer O-Anordnung, welche durch eine Strichpunktlinie in Fig. 6 veranschaulicht ist. Die Rotorwelle 11 ist über eine Verbindungseinrichtung 32 mit dem Getriebe 12 mechanisch wirkverbunden, was später mit Verweis auf Fig. 8 beschrieben wird.

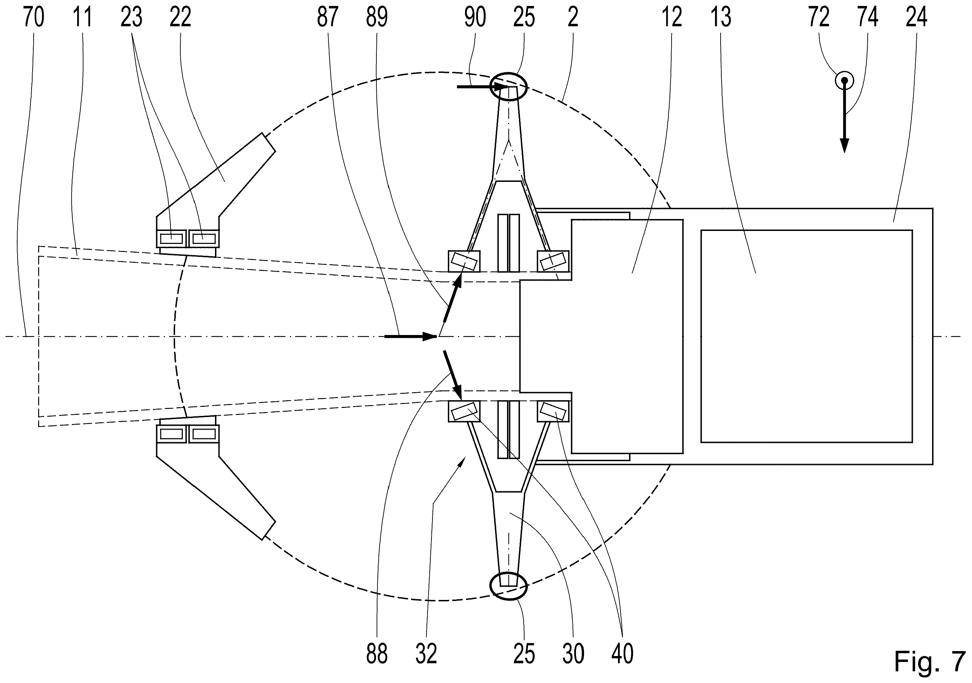

Mit Verweis auf Fig. 6 und 7 wird nun eine Krafteinleitung axialer Kräfte von der Rotorwelle 11 auf die Torsionslagereinheit 30 und die Grundplatte 20 beschrieben. Fig. 7 ist eine schematische Schnittansicht der Lageranordnung von Fig. 6, betrachtet von oben entlang der Hochrichtung. Wie in Fig. 7 dargestellt ist, teilt sich eine axiale Kraft 87, welche die Rotorwelle 11 in Richtung des Getriebes 12 aufbringt, durch die angestellte Lagerung in zwei Axialkraftkomponenten 89 auf. Gemäß der angestellten Lagerung verlaufen diese Axialkraftkomponenten 89 in einem schrägen Winkel relativ zu der Rotorwellenachse 70. Zumindest ein axialer Anteil 90 der jeweiligen Axialkraftkomponente 89 wird vorliegend an den Krafteinleitungsort 25 in die Grundplatte eingeleitet. Da die Lageranordnung und die Belastungszustände in der Draufsicht von Fig. 7 symmetrisch sind, gelten diese Zusammenhänge für die Krafteinleitungsorte 25 auf beiden Seiten der Rotorwellenachse 70, nämlich der oberen Seite und der unteren Seite in Fig. 7. Andererseits sind die Belastungszustände in der Darstellung von Fig. 6 nicht symmetrisch, da die Gewichtskraft 86 des Lagergehäuses 24 nach unten wirkt und somit eine einseitige Lagerbelastung herbeiführt. Jedoch ist die angestellte Lagerung durch die Radial-Axial-Lager 40 vorliegend derart ausgebildet, dass eine anteilige Axialkraft 88 in der Darstellung von Fig. 6 unterhalb der Rotorwellenachse 70 sowie links von der Stützachse 76 verläuft. Dadurch wirkt diese anteilige Axialkraft 88 einem durch die Gewichtskraft 86 des Lagergehäuses 24 bewirkten Moment um die Stützachse 76 entgegen.

Fig. 8 ist eine Veranschaulichung einer Demontage der Verbindungseinrichtung 32 und der Torsionslagereinheit 30 gemäß der ersten Ausführungsform. In einem Bereich (a) der Fig. 8 ist der montierte Zustand der Torsionslagereinheit 30 und der Verbindungseinrichtung 32 gezeigt. Die Torsionslagereinheit 30 und die Verbindungseinrichtung 32 sind vorliegend in einer Teilungsebene 31 lösbar aneinander befestigt. Die Teilungsebene 31 verläuft zwischen dem Rotor 4 und dem Getriebe 12 und senkrecht zu der Rotorwellenachse 70. Vorliegend befindet sich die Rotorwelle 11 auf einer Seite der Teilungsebene 31 und das Getriebe 12 befindet sich auf der anderen Seite der Teilungsebene 31.

Die Torsionslagereinheit 30 ist entlang der Teilungsebene 31 in einen rotorseitigen Torsionslagereinheitsabschnitt 35 und einen getriebeseitigen Torsionslagereinheitsabschnitt 37 teilbar. Die Verbindungseinrichtung 32 ist entlang der Teilungsebene 31 in einen Rotorwellenabschnitt 34 und einen Getriebeabschnitt 36 teilbar. Der Rotorwellenabschnitt 34 ist mit der Rotorwelle 11 mechanisch wirkverbindbar. Der Getriebeabschnitt 36 ist mit dem Getriebe 12 mechanisch wirkverbindbar. Vorliegend ist der Getriebeabschnitt 36 mit einem Getriebeelement 16, vorliegend einem Planetenträger, verbindbar, um das Torsionsmoment der Rotorwelle 11 über das Getriebeelement 16 in das Getriebe 12 einzuleiten. Die Rotorwelle 11 und der Rotorwellenabschnitt 34, das Getriebeelement 16 und der Getriebeabschnitt 36, die Torsionslagereinheitsabschnitte 35, 37 untereinander sowie der Rotorwellenabschnitt 34 und der Getriebeabschnitt 36 untereinander sind jeweils lösbar aneinander befestigt, vorliegend über Befestigungsmittel 92, 94, 96, 98. Die Befestigungsmittel 92, 94, 96, 98 sind vorliegen als Verschraubung ausgebildet.

Durch Lösen der Befestigungsmittel 92, 94, 96, 98 können mit Bezug auf die Teilungsebene 31 alle getriebeseitigen Bauteile von den rotorseitigen Bauteilen abgenommen werden. Die getriebeseitigen Bauteile sind in einem Bereich (b) der Fig. 8 gezeigt. Die getriebeseitigen Bauteile im demontierten Zustand sind in dem Bereich (c) der Fig. 8 gezeigt. Zur Demontage werden vorliegend zuerst die Befestigungsmittel 92, welche die Torsionslagereinheitsabschnitte 35, 37 verbinden, gelöst. Daraufhin werden die Befestigungsmittel 94, welche den Rotorwellenabschnitt 34 mit dem Getriebeabschnitt 36 verbinden, gelöst. Je nach Gestaltung der Torsionslagereinheitsabschnitte 35, 37 mit Hinblick auf Zugänglichkeit zu den Befestigungsmitteln 94 kann es hierzu erforderlich sein, mindestens einen der Torsionslagereinheitsabschnitte 35, 37 zu entfernen. Nach dem Lösen der Befestigungsmittel 94 können die jeweiligen Komponenten auf einer Seite der Teilungsebene 31 von den Komponenten auf der anderen Seite der Teilungsebene 31 abgenommen werden. Somit kann die Verbindung zwischen der Rotorwelle 11 und dem restlichen Triebstrang 10, beispielsweise dem Getriebe 12, getrennt werden, beispielsweise für Wartungsarbeiten. Nach dem Abnehmen können die Befestigungsmittel 96 zum Befestigen des Getriebeabschnitts 36 an dem Getriebeelement 16 gelöst werden. Gleichermaßen können die Befestigungsmittel 98 zum Befestigen des Rotorwellenabschnitts 34 an der Rotorwelle 11 gelöst werden. Dadurch sind die Torsionslagereinheit 30 und die Verbindungseinrichtung 32 auf einfache Weise demontiert. Vorliegend ist die Torsionslagereinheit 30 entlang einer weiteren, horizontalen Teilungsebene 33 teilbar, so dass nur ein Teil der Torsionslagereinheit 30 für den Zugang zu den Befestigungsmitteln 94 entfernt werden muss.

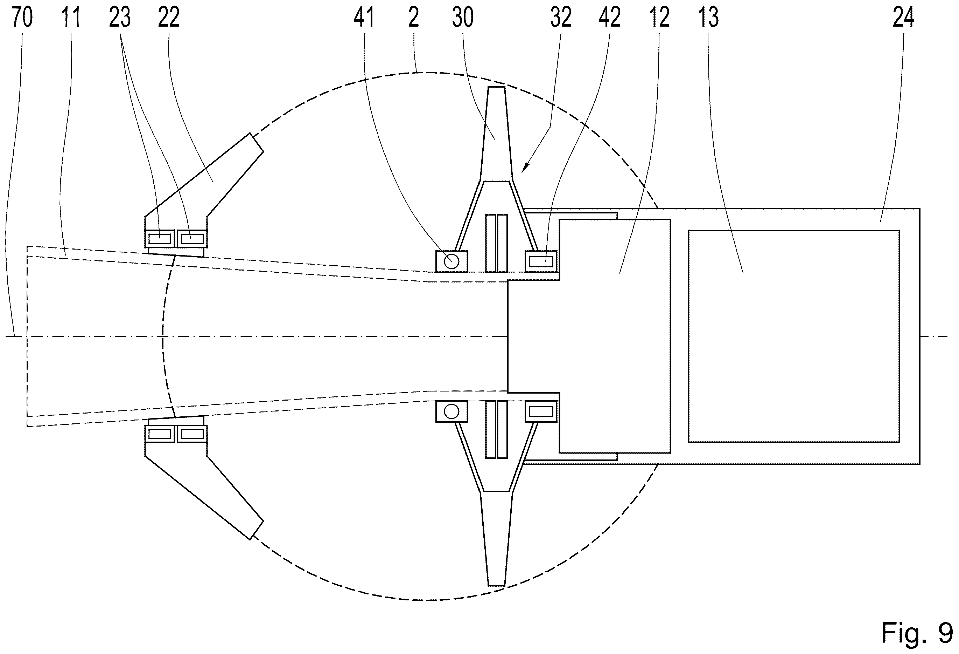

Fig. 9 ist eine schematische Schnittansicht einer Lageranordnung gemäß einer zweiten Ausführungsform. Es werden lediglich Unterschiede zu der ersten Ausführungsform von Fig. 6 bis 8 erläutert. Bei der zweiten Ausführungsform weist die Torsionslagereinheit 30 zum Lagern der Rotorwelle 11 ein Radial-Axial-Lager 41 sowie ein Radiallager 42 auf. Somit ist statt der angestellten Lagerung der ersten Ausführungsform eine Fest-Los-Lagerung vorgesehen. Das Radial-Axial-Lager 41 nimmt sowohl radiale Kräfte als auch axiale Kräfte von der Rotorwelle 11 auf. Das Radial-Axial-Lager 41 ist vorliegend als Kugelrollenlager ausgebildet. Das Radiallager 42 nimmt keine axialen Kräfte auf. Das Radiallager 42 ist vorliegend als Zylinderrollenlager ausgebildet.

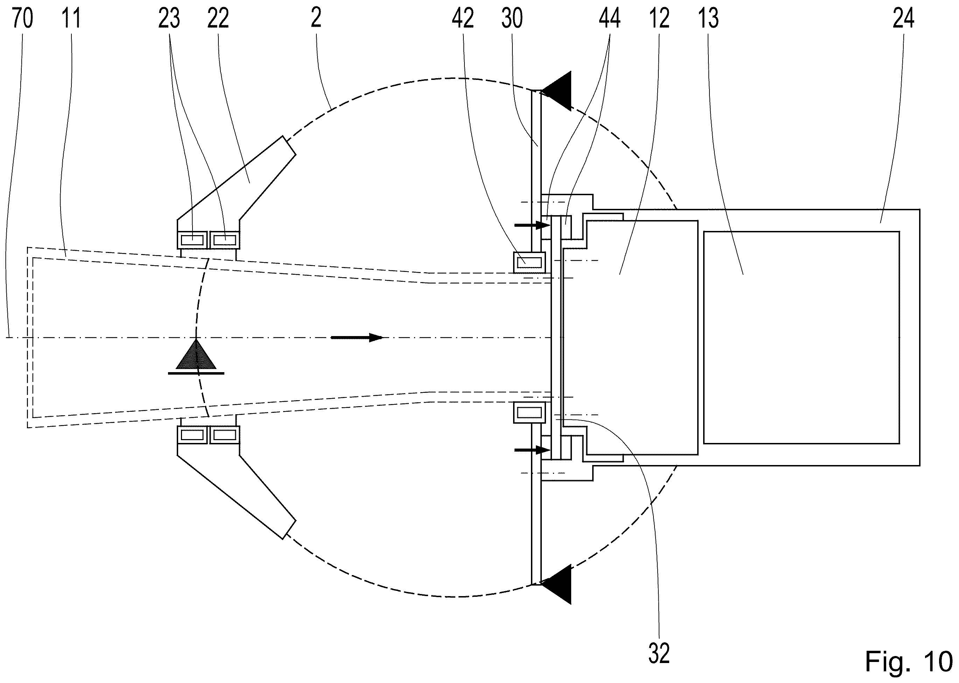

Fig. 10 ist eine schematische Schnittansicht einer Lageranordnung gemäß einer dritten Ausführungsform. Es werden lediglich Unterschiede zu der ersten Ausführungsform von Fig. 6 bis 8 erläutert. Bei der Lageranordnung gemäß der dritten Ausführungsform weist die Torsionslagereinheit 30 ein Radiallager 42 sowie ein Axiallager 44 auf. Das Radiallager 42 nimmt lediglich radiale Kräfte der Rotorwelle 11 auf und ist vorliegend als ein Wälzlager, genauer gesagt ein Zylinderrollenlager, ausgebildet. Das Axiallager 44 ist vorliegend ausgebildet, Axialkräfte der Rotorwelle 11 in beiden axialen Richtungen entlang der Rotorwellenachse 70 abzustützen. Das Axiallager 44 ist vorliegend als Gleitlager ausgebildet. Genauer gesagt weist das Axiallager 44 zwei Hälften auf, die ringförmige Lagerbauteile ausgebildet sind und auf beiden axialen Seiten der Verbindungseinrichtung 32 die axialen Kräfte von dieser aufnehmen. Dies ist für eine Richtung in Fig. 10 durch Pfeile parallel zu der Rotorwellenachse 70 veranschaulicht. Das Axiallager 44 ist vorliegend umlaufend über den gesamten Umfang um die Rotorwelle 11 ausgeführt. In einer weiteren Ausführungsform ist das Axiallager 44 nur abschnittsweise entlang des Umfangs um die Rotorwelle 11 vorgesehen.

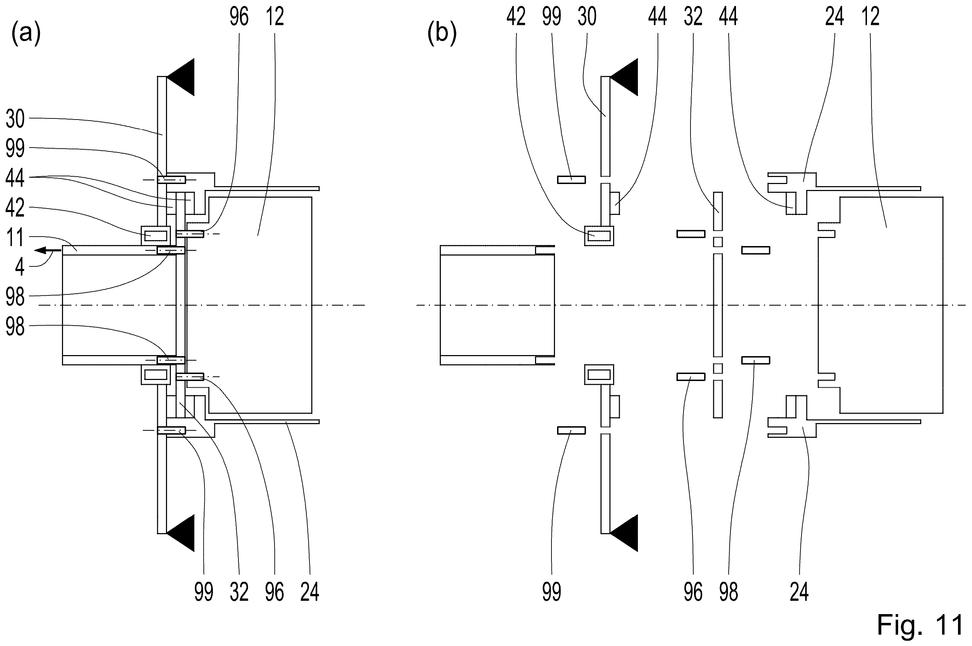

Darüber hinaus ist bei der dritten Ausführungsform die Teilungsebene 31 nicht vorgesehen, so dass die Torsionslagereinheit 30 und die Verbindungseinrichtung 32 zur Demontage nicht geteilt werden. Dies wird im Folgenden mit Verweis auf Fig. 11 beschrieben. Wie in dem Bereich (a) auf der linken Seite von Fig. 11 erkennbar ist, sind sowohl die Torsionslagereinheit 30 als auch die Verbindungseinrichtung 32 als scheibenförmige Elemente ausgebildet. Somit entfallen die Verschraubungen mit den Befestigungsmitteln 92 und 94. Das Lagergehäuse 24 ist bei der dritten Ausführungsform an der Torsionslagereinheit 30 befestigt. Im Rahmen dieser Befestigung wird bei der vorliegenden Ausführungsform die Verbindungseinrichtung 32 zwischen beiden Seiten des Axiallagers 44 geklemmt. Die Befestigung des Lagergehäuses 24 an der Torsionslagereinheit 30 erfolgt vorliegend mit Befestigungsmitteln 99, die vorliegend als Verschraubung ausgeführt sind. Die Rotorwelle 11 wird wie bei der ersten Ausführungsform über Befestigungsmittel 98 an der Verbindungseinrichtung 32 befestigt. Das Getriebe 12 ist über die Befestigungsmittel 96 an der Verbindungseinrichtung 32 befestigt (das Getriebeelement 16 der ersten Ausführungsform ist hier nicht dargestellt). Da die zweiteilige Ausführung der Verbindungseinrichtung 32 der ersten Ausführungsform bei der dritten Ausführungsform nicht vorgesehen ist, sind zum Zwecke der Zugänglichkeit die Befestigungsmittel 96 auf einem größeren Teilkreisdurchmesser vorgesehen als die Befestigungsmittel 98. Zudem überlappen die Befestigungsmittel 96 nicht die Rotorwelle 11. Somit kann der Zugang zu den Befestigungsmitteln 96 zum Abnehmen der Verbindungseinrichtung 32 von dem Getriebe 12 gewährleistet werden.

In dem Bereich (b) auf der rechten Fig. 11 ist der demontierte Zustand der Torsionslagereinheit 30 und der Verbindungseinrichtung 32 dargestellt. Zur Demontage werden die Befestigungsmittel 99, die Befestigungsmittel 96 und die Befestigungsmittel 98 in dieser Reihenfolge gelöst. Demnach verbleiben das Radiallager 42 und eine Hälfte des Axiallagers 44 an der Torsionslagereinheit 30 befestigt, während die andere Hälfte des Axiallagers 44 an dem Lagergehäuse 24 befestigt bleibt.

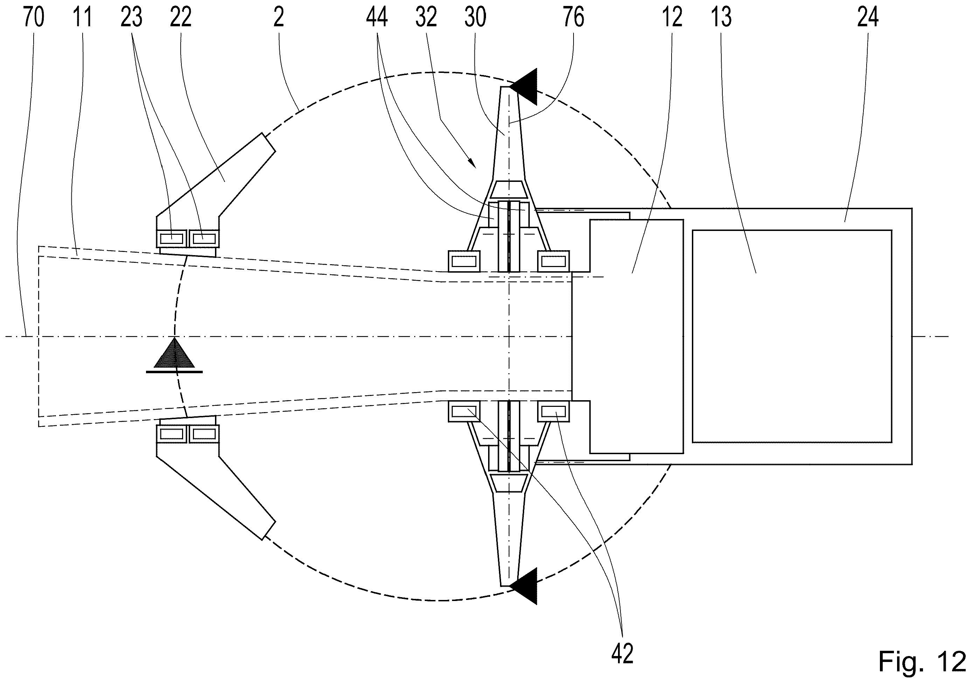

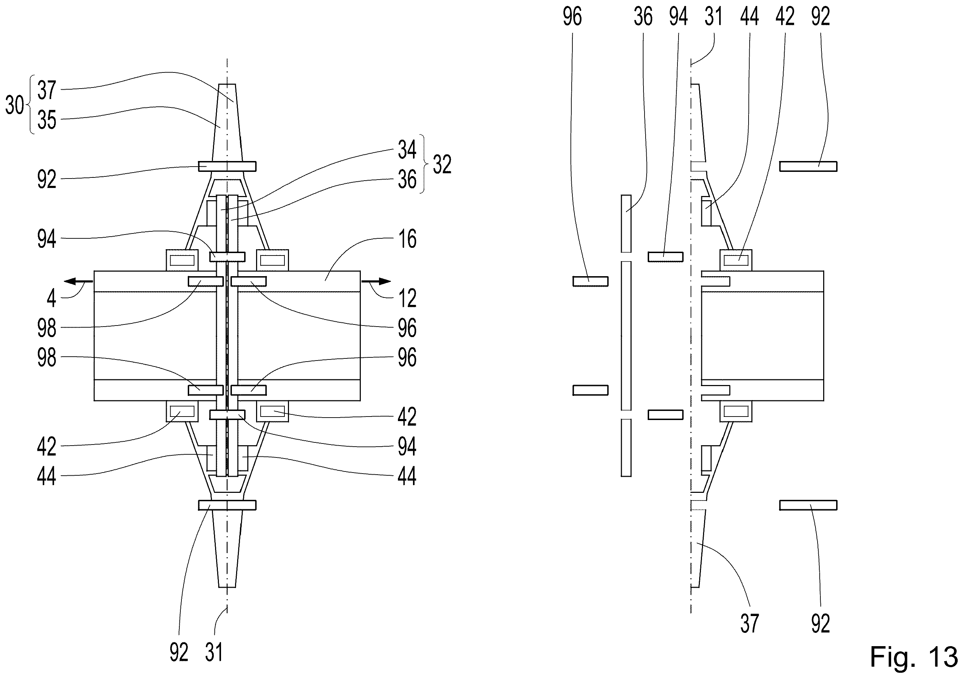

Fig. 12 ist eine schematische Schnittansicht einer Lageranordnung gemäß einer vierten Ausführungsform. Es werden lediglich Unterschiede zu der ersten Ausführungsform von Fig. 6 bis 8 erläutert. Bei der vierten Ausführungsform weist die Torsionslagereinheit 30 zwei Radiallager 42 und ein Axiallager 44 auf. Vorliegend sind die zwei Radiallager 42 symmetrisch zu der Stützachse 76 angeordnet. Zudem sind die zwei Radiallager 42 vorliegend als Gleichteile bereitgestellt. Die Torsionslagereinheit 30 und die Verbindungseinrichtung 32 sind wie bei der ersten Ausführungsform teilbar. Die Verbindungseinrichtung 32 wird wie bei der dritten Ausführungsform durch Klemmen der Verbindungseinrichtung 32 zwischen zwei Hälften des Axiallagers 44 axial abgestützt. Fig. 13 ist eine Veranschaulichung einer Demontage der Verbindungseinrichtung 32 und der Torsionslagereinheit 30 gemäß der vierten Ausführungsform. Wie einer Zusammenschau von Fig. 8 und Fig. 13 entnehmbar ist, kann die Demontage bei der vierten Ausführungsform auf nahezu gleiche Weise wie bei der ersten Ausführungsform erfolgen. Abweichend davon verbleibt bei der vierten Ausführungsform nach der Demontage je eine Hälfte des Axiallagers 44 in dem Rotorwellenabschnitt 35 und dem Getriebeabschnitt 37.

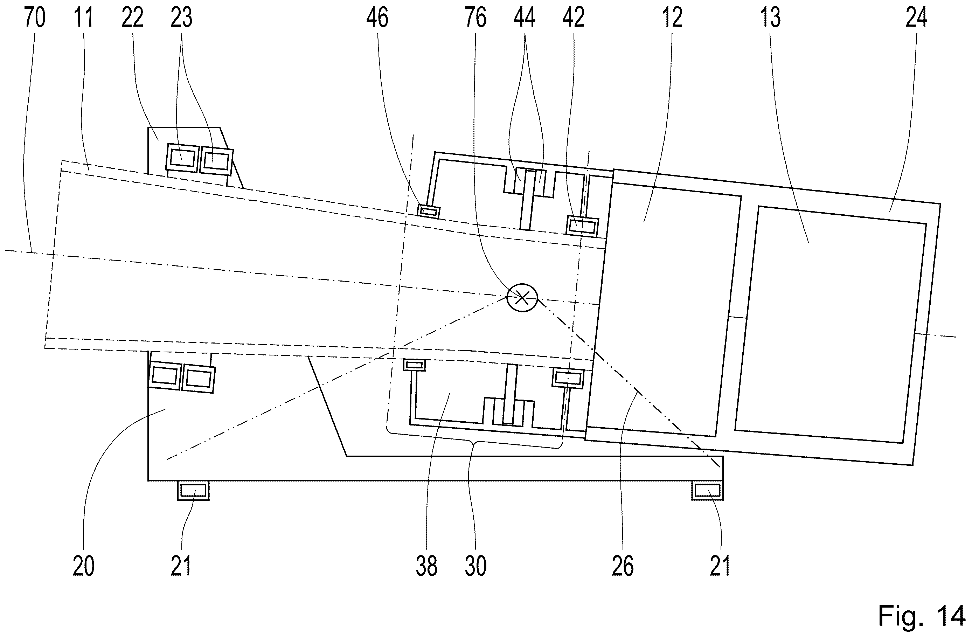

Fig. 14 zeigt schematisch eine Lageranordnung gemäß einer fünften Ausführungsform in einer seitlichen Schnittansicht wie Fig. 6. Es werden lediglich Unterschiede zu der vierten Ausführungsform von Fig. 12 erläutert. Bei der fünften Ausführungsform weist die Torsionslagereinheit 30 ein Radiallager 42 sowie ein weiteres Radiallager 46 auf. Das Radiallager 42 ist entlang der Rotorwellenachse 70 näher an der Stützachse 76 angeordnet als das weitere Radiallager 46. Demnach nimmt das Radiallager 42 einen größeren Anteil der Kräfte und Momente zum Einleiten über den Stützabschnitt 26 in die Grundplatte 20 auf. Das weitere Radiallager 46 kann somit kleiner dimensioniert werden als das Radiallager 42. Das weitere Radiallager 46 dient daher primär dazu, die Torsionslagereinheit 30 und das Lagergehäuse 24 an der Biegung der Rotorwelle 11 auszurichten. Zudem ist wie bei der fünften Ausführungsform die Torsionslagereinheit 30 mit demselben Durchmesser wie das Lagergehäuse 24 ausgebildet. Darüber hinaus weist die Torsionslagereinheit 30 einen Schmiermittelaufnahmeraum 38 auf, in welchem Schmiermittel, beispielsweise für das Getriebe 12, aufgenommen wird.

### Bezugszeichen

- 1: Windkraftanlage
- 2: Turm
- 3: Gondel
- 4: Rotor
- 5: Boden
- 6: Gierlager
- 10: Triebstrang
- 11: Rotorwelle
- 12: Getriebe
- 13: Generator
- 14: Hilfsaggregate
- 15: Nabe
- 16: Getriebeelement
- 20: Grundplatte
- 21: Grundplattenlager
- 22: Hauptlagerabschnitt
- 23: Hauptlager
- 24: Lagergehäuse
- 25: Krafteinleitungsort
- 26: Stützabschnitt
- 27: Aussparung
- 28, 29: Teilungslinie
- 30: Torsionslagereinheit
- 31, 33: Teilungsebene
- 32: Verbindungseinrichtung
- 34: Rotorwellenabschnitt
- 35, 37: Torsionslagereinheitsabschnitt
- 36: Getriebeabschnitt
- 38: Schmiermittelaufnahmeraum
- 40, 41: Radial-Axial-Lager
- 42, 46: Radiallager
- 44: Axiallager
- 70: Rotorwellenachse
- 72: Hochrichtung
- 74: Querrichtung
- 76: Stützachse
- 80: Abstützung Torsionsmoment
- 82: Abstützung sonstiger Rotorwellenlasten
- 84, 86: Gewichtskraft
- 87, 88: Axialkraft
- 89: Axialkraftkomponente
- 90: axialer Anteil
- 92, 94, 96, 98, 99: Befestigungsmittel

## Patentansprüche

1. Lageranordnung für eine Windkraftanlage (1) zum Lagern eines Triebstrangs (10) an einem Turm (2) der Windkraftanlage (1), mit einer Grundplatte (20), welche an dem Turm (2) anbringbar ist und einen Hauptlagerabschnitt (22) zum drehbaren Lagern einer Rotorwelle (11) des Triebstrangs (10) und zum Abstützen von Kräften der Rotorwelle (11) aufweist, wobei der Hauptlagerabschnitt (22) ausgebildet ist, radiale Kräfte mit Bezug auf eine Rotorwellenachse (70) in die Grundplatte (20) einzuleiten und axiale Verschiebungen entlang der Rotorwellenachse (70) zuzulassen, und wobei die radialen Kräfte Komponenten in einer Querrichtung (74) und Komponenten in einer Hochrichtung (72) aufweisen, einem Lagergehäuse (24) zum Aufnehmen und Lagern von Teilen (12, 13) des Triebstrangs (10), und einer Torsionslagereinheit (30) zum Abstützen eines Torsionsmoments um die Rotorwellenachse (70), welches von dem Triebstrang (10) auf das Lagergehäuse (24) aufgebracht wird, wobei die Torsionslagereinheit (30) ausgebildet ist, axiale Kräfte in Richtung der Rotorwellenachse (70) und Torsionsmomente um die Rotorwellenachse (70) in die Grundplatte (20) einzuleiten.

2. Lageranordnung nach Anspruch 1, **dadurch gekennzeichnet, dass** die Grundplatte (20) einen Stützabschnitt (26) aufweist, der ausgebildet ist, die Torsionslagereinheit (30) drehbar um eine in der Querrichtung (74) verlaufende Stützachse (76) abzustützen.

3. Lageranordnung nach Anspruch 1 oder 2, **dadurch gekennzeichnet, dass** die Torsionslagereinheit (30) zur Lagerung der Rotorwelle (11) eine angestellte Lagerung mit zwei Radial-Axial-Lagern (40) aufweist, die jeweils radiale und axiale Kräfte übertragen.

4. Lageranordnung nach Anspruch 1 oder 2, **dadurch gekennzeichnet, dass** die Torsionslagereinheit (30) zur Lagerung der Rotorwelle (11) ein Radial-Axial-Lager (41) und ein separates Radiallager (42) aufweist.

5. Lageranordnung nach Anspruch 1 oder 2, **dadurch gekennzeichnet, dass** die Torsionslagereinheit (30) zur Lagerung der Rotorwelle (11) ein Radiallager (42) und ein separates Axiallager (44) aufweist.

6. Lageranordnung nach Anspruch 5, **dadurch gekennzeichnet, dass** die Torsionslagereinheit (30) zur Lagerung der Rotorwelle (11) ein weiteres Radiallager (42) aufweist, und das Radiallager (42) und das weitere Radiallager (42) symmetrisch um die Stützachse (76) angeordnet sind.

7. Lageranordnung nach Anspruch 5, **dadurch gekennzeichnet, dass** die Torsionslagereinheit (30) zur Lagerung der Rotorwelle (11) ein weiteres Radiallager (46) aufweist, und das weitere Radiallager (46) weiter von der Stützachse (76) beabstandet ist als das Radiallager (42).

8. Lageranordnung nach einem der vorangehenden Ansprüche, **dadurch gekennzeichnet, dass** die Lageranordnung eine Verbindungseinrichtung (32) aufweist, welche einen Rotorwellenabschnitt (34), welcher mit der Rotorwelle (11) drehfest verbindbar ist, und einen Getriebeabschnitt (36), welcher mit einem Getriebe (12) des Triebstrangs (10) drehfest verbindbar ist, aufweist.

9. Lageranordnung nach Anspruch 8, wobei mindestens einer von dem Rotorwellenabschnitt (34) und dem Getriebeabschnitt (36) in einem Kraftfluss zum Einleiten von axialen Kräften von der Rotorwelle (11) in die Torsionslagereinheit (30) angeordnet ist.

10. Lageranordnung nach einem der vorangehenden Ansprüche, **dadurch gekennzeichnet, dass** die Torsionslagereinheit (30) einen Schmiermittelaufnahmeraum (38) aufweist.

11. Lageranordnung nach einem der vorangehenden Ansprüche, **dadurch gekennzeichnet, dass** die Grundplatte (20) als ein Schalenelement ausgebildet ist, das im Wesentlichen einer Zylinderfläche folgt.

12. Windkraftanlage (1) mit einem Triebstrang (10), einem Turm (2) und einer Lageranordnung nach einem der vorangehenden Ansprüche, welche an einer Spitze des Turms (2) angebracht ist.

13. Windkraftanlage (1) nach Anspruch 12, **dadurch gekennzeichnet, dass** ein Krafteinleitungsort (25) zum Einleiten von Kräften von der Torsionslagereinheit (30) in die Grundplatte (20) eine spitzenseitige Wand des Turms (2) in der Hochrichtung (72) überlappt.
